# EUROPEAN PATENT APPLICATION

(11) **EP 3 767 234 A1**
(43) Date of publication of application: **20.01.2021**
(21) Application number: 20184906.4
(22) Date of filing: 09.07.2020
(51) Int. Cl.: G01C 21/00, H04W 4/021

(54) **NAVIGATION DEVICE**

(30) Priority: 17.07.2019 US 201916513808
(71) Applicant: Aptiv Technologies Limited, 14004 St. Michael (BB)
(72) Inventor: KNUTSON, Eric P., Kokomo, IN 46901 (US); SPELL, David M., Kokomo, IN 46904 (US); PHAM, Linh, Kokomo, IN 46902 (US)
(74) Representative: Westphal, Mussgnug & Partner Patentanwälte mbB

(57) **Abstract**

A navigation device is associated with a navigable physical property for which navigation instructions or data are not publicly accessible by a vehicle navigation system. The navigation device includes a transceiver unit, and a navigation unit. The transceiver unit is configured to communicatively couple with a vehicle. The navigation unit is associated with the navigable physical property. The navigation unit is configured to determine, based on communications with the vehicle via the transceiver unit, whether the vehicle should be enabled to navigate the navigable physical property. In accordance with the determination that the vehicle should be enabled to navigate the navigable physical property, the navigation unit communicates instructions and data that enable the vehicle to navigate the navigable physical property.

## Description

This disclosure generally relates to a navigation device that determines a position of a communication device within a vehicle.

Private properties are typically omitted from being mapped with sufficient details required for autonomous vehicle navigation. Autonomous vehicles that require highly detailed maps may be unable to navigate these private properties without handing control over to an operator of the vehicle.

The present invention will now be described, by way of example with reference to the accompanying drawings, in which:
Fig. 1 is an illustration of a navigation device in accordance with one embodiment;
Fig. 2 is an illustration of the navigation device of Fig. 1 in accordance with one embodiment;
Fig. 3 is an illustration of the navigation device of Fig. 1 in accordance with one embodiment;
Fig. 4 is an illustration of the navigation device of Fig. 1 in accordance with one embodiment;
Fig. 5 is an illustration of the navigation device of Fig. 1 in accordance with one embodiment;
Fig. 6 is an illustration of a method of operating the navigation device of Fig. 1 in accordance with another embodiment;
Fig. 7 is an illustration of a method of operating an access control device of Fig. 8 in accordance with yet another embodiment;
Fig. 8 is an illustration of an access control device in accordance with another embodiment; and
Fig. 9 is an illustration of a method of operating the access control device of Fig. 8 in accordance with yet another embodiment;

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

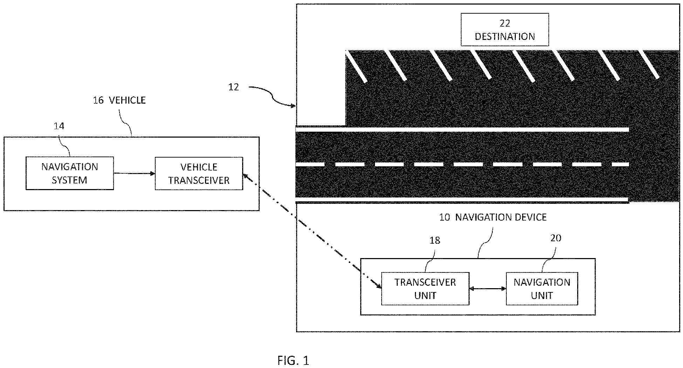

Fig. 1 illustrates an example of a navigation device 10 associated with a navigable physical property 12, hereafter the property 12, for which navigation instructions or data are not publicly accessible by a vehicle navigation system 14. Examples of the property 12 may include, but are not limited to, a long driveway, a loading dock, a private lane, an apartment complex, a parking structure, a school campus, a business campus, etc. As will be described in more detail below, the navigation device 10 may provide various improvements over other navigation devices. For example, the navigation device 10 may provide a map of the property 12 to a visiting vehicle 16 (hereafter the vehicle 16) that enables autonomous vehicle operation on the property 12 without the driver having to take control of the vehicle 16. In an example, the vehicle 16 is an autonomous vehicle 16, such as an autonomous mobility on demand (AMoD) vehicle 16 or a delivery vehicle 16. In an example, the delivery vehicle 16 may be a heavy duty tractor trailer combination configured to deliver heavy freight. In another example, the delivery vehicle 16 may be a light duty vehicle 16 configured to deliver small packages or people, such as "last mile" deliveries from a transportation hub.

The navigation device 10 includes a transceiver unit 18 configured to communicatively couple with the vehicle 16. In an example, the transceiver unit 18 communicates with the vehicle 16 using Dedicated Short Range Communications (DSRC), Vehicle-to-Infrastructure (V2I) communication protocols that include both Dedicated Short Range Communications (DSRC) and non-DSRC technologies. DSRC is a two-way wireless communications protocol suite that integrates the IEEE 802.11, 1609.x standards, SAE J2735, and SAE J2945. Non-DSRC technologies include Radio Frequency Identification (RFID), Worldwide Interoperability for Microwave Access (WiMAX), Wi-Fi, Bluetooth, 5G V2I, and cellular communication.

The navigation device 10 also includes a navigation unit 20 associated with the property 12. As used herein, the term "associated with" includes, but is not limited to, on the property 12, at a gate to the property 12, attached to a home, and at a roadside entrance to the property 12. The navigation unit 20 is communicatively coupled with the transceiver unit 18, and is configured to determine whether the vehicle 16 should be enabled to navigate the property 12. The navigation unit 20 includes a controller circuit (not shown) configured to make the determination whether the vehicle 16 should be enabled to navigate the property 12. In an example, the controller circuit identifies a purpose or mission of the vehicle 16 as being eligible to enter a boundary of the property 12. In another example, the controller circuit identifies occupants of the vehicle 16 as being eligible to enter the boundary of the property 12. In yet another example, the controller circuit identifies the vehicle 16 itself as being eligible to enter the boundary of the property 12 (e.g., an emergency vehicle, school bus, etc.) In yet another example, the controller circuit identifies a cargo of the vehicle 16 as being eligible to enter the boundary of the property 12.

The controller circuit may include a processor (not shown) such as a microprocessor or other control circuitry such as analog and/or digital control circuitry. The control circuitry may include one or more application-specific integrated circuits (ASICs) or field programmable gate arrays (FPGAs) that are programmed to perform the techniques, or may include one or more general purpose hardware processors programmed to perform the techniques pursuant to program instructions in firmware, memory, other storage, or a combination. The controller circuit may also combine custom hard-wired logic, ASICs, or FPGAs with custom programming to accomplish the techniques. The controller circuit may include a memory or storage media (not shown), including non-volatile memory, such as electrically erasable programmable read-only memory (EEPROM) for storing one or more routines, thresholds, and captured data. The EEPROM stores data and allows individual bytes to be erased and reprogrammed by applying special programming signals. The controller circuit may include other examples of non-volatile memory, such as flash memory, read-only memory (ROM), programmable read-only memory (PROM), and erasable programmable read-only memory (EPROM). The controller circuit may include volatile memory, such as dynamic random-access memory (DRAM), and static random-access memory (SRAM). The one or more routines may be executed by the processor to perform steps for determining whether the vehicle 16 should be enabled to navigate the property 12 based on signals received by the navigation unit 20 from the transceiver unit 18 as described herein. In an example, the navigation unit 20 includes the controller circuit (i.e., the controller circuit is integral to the navigation unit 20 electrical packaging). In another example, the navigation unit 20 and the controller circuit are separate devices. The controller circuit may also be part of a cloud computing environment and be located remote from the navigation device 10.

Once the navigation unit 20 determines that the vehicle 16 should be enabled to navigate the property 12, the navigation unit 20 communicates with the vehicle 16, via the transceiver unit 18, one or more of instructions and data that enable the vehicle 16 to navigate the property 12. That is, once the vehicle 16 is identified as being eligible to enter the boundary of the property 12, the navigation unit 20 transfers information needed for the vehicle 16 to navigate the property 12, such as maps and/or operating instructions, as will be described in more detail below.

In an example, the instructions and data indicate a route that enables the vehicle 16 to navigate the property 12. In this example, the route is a travel path which the vehicle 16 follows to a destination 22. The route may follow paved roads that include lane markings that designate travel lanes, and/or parking areas that may not include lane markings. In another example, the instructions and data include global positioning system (GPS) data that enables the vehicle 16 to navigate the property 12. In this example, the GPS data includes a series of waypoints that the vehicle 16 may follow to the destination 22. In yet another example, both the route and GPS data are transferred to the vehicle 16. In yet another example, the instructions and data include the destination 22 for the vehicle 16 within the boundaries of the property 12. In this example, the destination 22 may be a delivery spot, a parking space, an office location, etc.

In an example, the navigation unit 20 determines the destination 22 is based on an identity of the vehicle 16, an identity of the occupant, an identity of a package, or the like, that is communicated between the vehicle 16 and the navigation unit 20. In this example, the delivery vehicle 16 communicates its identity to the navigation unit 20 via the vehicle transceiver, and the navigation unit 20 responds with the destination 22 being a loading dock. In another example, the AMoD vehicle 16 is carrying a child and a package for delivery. In this example, the AMoD vehicle 16 communicates the identity of the child and the package to the navigation unit 20 via the vehicle transceiver, and the navigation unit 20 responds with the first destination 22 being a playground for the child, and the second destination 22 being a specific location to deliver the package.

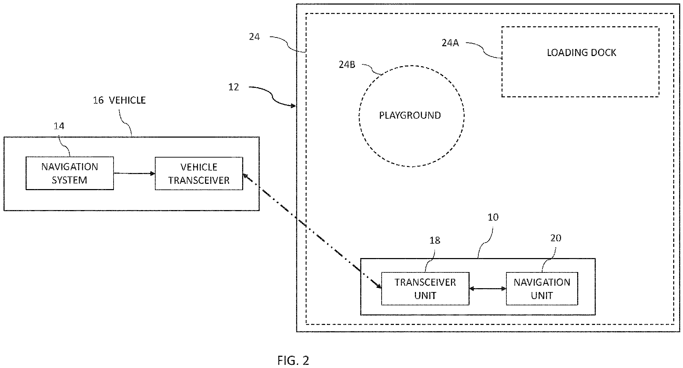

Fig. 2 illustrates an example where the instructions and data include at least one geofence 24. In an example, the geofence 24 is a virtual geographic boundary defined by a predefined set of boundaries established by GPS coordinates. In the example illustrated in Fig. 2, the geofence 24 surrounds the property 12, and additional geofences 24A and 24B designate particular areas within the property 12. In this example, geofence 24A is rectangular in shape and designates the loading dock, and geofence 24B is circular in shape and designates the playground. In an example, the instructions and data include operating instructions for the vehicle 16 while the vehicle 16 is traveling within the geofences 24, 24A, and 24B. These operating instructions include, but are not limited to, speed limits and/or exclusion zones for the particular geofence 24, 24A, and 24B. These instructions can include other operating instructions for the vehicle 16, such as required running lights and/or hazard lights. In the example illustrated in Fig. 2, the operating instructions may exclude any or all vehicle 16 traffic from entering geofence 24B (i.e., the playground) for safety reasons. Additionally, the operating instructions for vehicles entering geofence 24A (i.e., the loading dock) may include a specific bay for the delivery vehicle 16 to dock and load/unload its cargo. In another example, a specific region of the property 12 is defined by radio frequency (RF) transmissions from an underground antenna (e.g., a wire) that surrounds the specific region of the property 12. In this example, the RF transmissions have a limited range such that the vehicle 16 receives the RF transmissions only when in close proximity (e.g., within 2 meters) to the underground antenna. The instructions and data are transmitted to the vehicle 16 via the underground antenna and may include the operating instructions and/or map data for the vehicle 16 to navigate to a particular destination 22.

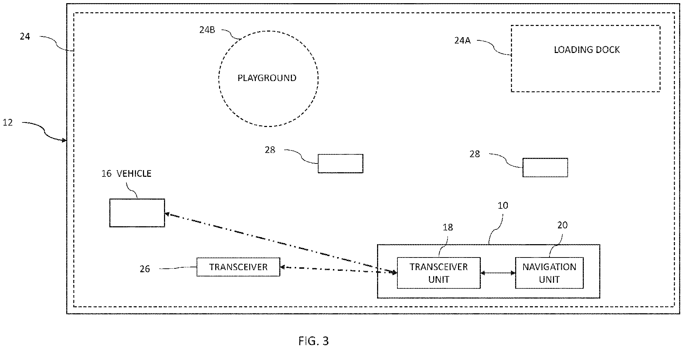

Fig. 3 illustrates an example where the vehicle 16 has entered the boundary of the property 12. In an example, the vehicle 16 is geotagged upon entering the property 12. Geotagging is a process of adding geographic identification metadata, such as GPS coordinates, to various media, objects 28, and/or vehicles 16. In an example, the navigation system 14 on the vehicle 16 transmits the vehicle's 16 GPS coordinates to the navigation device 10, and the navigation unit 20 associates the GPS coordinates with the vehicle 16. In another example, the navigation unit 20 determines the GPS coordinates of the vehicle 16 based on the radio frequency signals received from the vehicle 16 by an array of antennas (not shown) and determines the position through a process of triangulation or trilateration. In this example, the navigation unit 20 uses the Received Signal Strength Indicator values (RSSI values) of the radio signals received by the transceiver unit 18. The RSSI values are a measurement of the power present in the received radio signal. Larger RSSI values indicate stronger received radio signals and are inversely related to a distance between the signal source (i.e. the vehicle 16) and the transceiver unit 18. That is, the stronger the detected radio signal (i.e., the larger RSSI value), the shorter the distance between the vehicle 16 and the transceiver unit 18. In another example, the navigation unit 20 receives the GPS coordinates from a smartphone located within the vehicle 16. Likewise, time of flight for these radio signals produced by the smartphone can be used for localization and geotagging of the vehicle 16.

In the example illustrated in Fig. 3, the vehicle 16 is tracked by the navigation unit 20 while the vehicle 16 is inside the geofence 24. That is, the navigation unit 20 records the GPS coordinates associated with the vehicle 16 and stores the vehicle's 16 geographic position in the memory of the controller circuit as the vehicle 16 navigates the property 12. In an example, the tracking of the vehicle 16 includes a time-stamp such that the position of the vehicle 16 at all times may be recorded in the memory of the controller circuit. This information may assist accident investigation, and/or assist in the investigation of nefarious activities that may be related to the vehicle 16 while navigating the property 12. The tracking of the vehicle 16 is beneficial because the navigation unit 20 may update or change the instructions and data transmitted to the vehicle 16 based on conditions proximate the location of the vehicle 16. In the example of the delivery vehicle 16 with the destination 22 of the loading dock, the navigation unit 20 may assign and/or reassign the bay for the delivery vehicle 16 to dock based on bay availability and/or the specific cargo that is being delivered and/or to be loaded on the delivery vehicle 16. In another example, the navigation unit 20 may track the AMoD vehicle 16 with the destination 22 of the playground to ensure the AMoD vehicle 16 reaches the playground and does not drive into other zones within the property 12 that may not be appropriate for AMoD vehicle 16 to travel, such as the loading dock. In an example, the navigation unit 20 tracks the vehicle 16 until the vehicle 16 exits the property 12.

In an example, the communications with the vehicle 16 include a security key. The security key is a code or password that is stored in both the memory of the navigation unit 20 and in the vehicle 16 and enables a secure wireless communication link between the navigation device 10 and the vehicle 16. The security key may be associated with wireless security systems such as Wired Equivalent Privacy (WEP), Wi-Fi Protected Access (WPA, WPA2). In an example, the security key is associated with a digital certificate or identity certificate that is used to prove the ownership of the security key. In an example, the vehicle 16 transmits a request to the navigation device 10 to receive the instructions and data. In response, the navigation unit 20 transmits a challenge to the vehicle 16 requesting the security key. The vehicle 16 then responds with the security key and, if the security keys match, the vehicle 16 receives the instructions and data from the navigation unit 20. In an example, the security key is unique to the particular geofence 24, 24A, 24B, and/or destination 22. In an example, the security key is temporary and expires after a predefined time period. In this example, the vehicle 16 may receive the temporary security key prior to arriving at the property 12 for use on a specific date and/or time window. In another example, the security key is permanent (i.e., non-revocable) and may be issued to vehicles 16 that have established a security clearance and/or a trusted relationship relative to the property 12. In an example, the security key is exchanged each time the vehicle 16 attempts to access the instructions and data to navigate the property 12. In this example, the security key controls whether the vehicle 16 is allowed access to the instructions and data needed to navigate the property 12. As such, when the vehicle 16 exits the property 12, or when a time constraint has expired, the navigation unit 20 may not accept the security key from the vehicle 16, and the vehicle 16 would not be enabled to navigate the property 12.

In an example, the instructions and data is deleted from the vehicle 16 upon the vehicle 16 exiting the property 12. In an example, the instructions and data include a software routine that automatically deletes the instructions and data when the vehicle 16 exits the geofence 24 zone. In another example, the navigation unit 20 sends a command to the vehicle 16 requesting the deletion of the instructions and data over the secure link established by the exchange of the security key. In this example, the navigation system 14 on the vehicle 16 deletes the instructions and data when the vehicle 16 exits the property 12.

Referring back to Fig. 3, in an example, the navigation unit 20 transmits a notification of an arrival of the vehicle 16 to another transceiver 26. This notification may be used as a "virtual doorbell" that notifies other people or systems associated with the property 12 of the arrival of the vehicle 16. In the example of the delivery vehicle 16 with the destination 22 of the loading dock, the notification may alert loading dock personnel to the arrival of the delivery vehicle 16 so that the loading dock personnel may prepare to load/unload the delivery vehicle 16. In the example of the AMoD vehicle 16 with the destination 22 of the playground, the notification may alert safety personnel to the arrival of the occupants of the AMoD vehicle 16 so that the safety personnel may receive the occupants of the AMoD vehicle 16. In an example, the notification is used to activate a barrier, such as a gate, to allow the vehicle 16 to enter and/or exit a particular geofence 24. In another example, the notification is used to open a receptacle or the vehicle 16 to receive a package for secure package delivery.

In an example, the vehicle 16 transmits metadata associated with a purpose of the vehicle 16 to the navigation unit 20. In an example, the purpose of the delivery vehicle 16 is to deliver a package to a receiving vehicle (not shown) parked within the geofence 24. In this example, the delivery vehicle 16 transmits the identity of the receiving vehicle that is to receive the package, and the navigation unit 20 transmits instructions and data to the delivery vehicle 16 that indicate the GPS coordinates and route to navigate to the receiving vehicle. The delivery vehicle 16 may deliver the package to the receiving vehicle and exit the property 12 along the same route that was used to navigate to the receiving vehicle. In another example, the metadata includes details of the cargo of the vehicle 16, such as a Bill of Lading for the delivery vehicle 16. In this example, the navigation unit 20 routes the delivery vehicle 16 to a particular bay on the loading dock based on the Bill of Lading. In another example, the metadata includes an identity of the occupants of the AMoD vehicle 16. In this example, the navigation unit 20 routes the AMoD vehicle 16 to a particular destination 22 based on the identity of the occupants, such as the playground or another location within the boundary of the property 12.

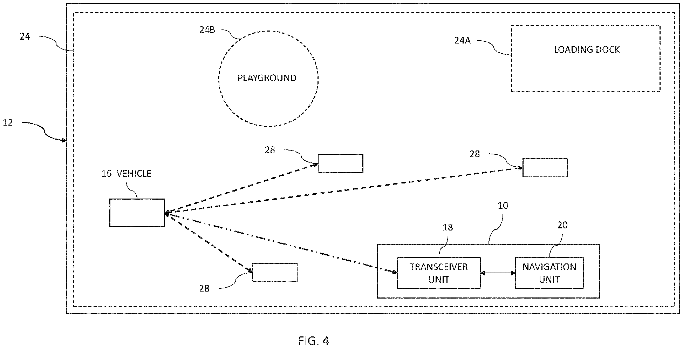

Fig. 4 illustrates the vehicle 16 navigating the property 12 where the vehicle 16 detects objects 28, such as other vehicles, pedestrians, and/or obstructions. In an example, the instructions and data in the navigation unit 20 is updated based on sensors located on the vehicle 16. The sensors on the vehicle 16 may include cameras, RADAR, LiDAR, Vehicle to Pedestrian Communication (V2P), or any combination thereof. The sensors may classify the objects 28 and identify the object's 28 GPS coordinates and/or movement. In this example, the vehicle 16 transmits the classification and coordinates of the objects 28 to the navigation unit 20, and the navigation unit 20 updates the route for the vehicle 16 to navigate the property 12 to the desired destination 22, while avoiding the objects 28. In another example, the navigation unit 20 uses the information related to the objects 28 to route other vehicles to their particular destinations 22. In another example, the navigation unit 20 uses the information related to the objects 28 that are obstructions to guide service vehicles 16 and/or service personnel to the objects 28 to remove the obstruction. In this example, the obstruction may be another vehicle in need of assistance, a fallen tree that is blocking the roadway, and/or other objects 28 such as garbage receptacles.

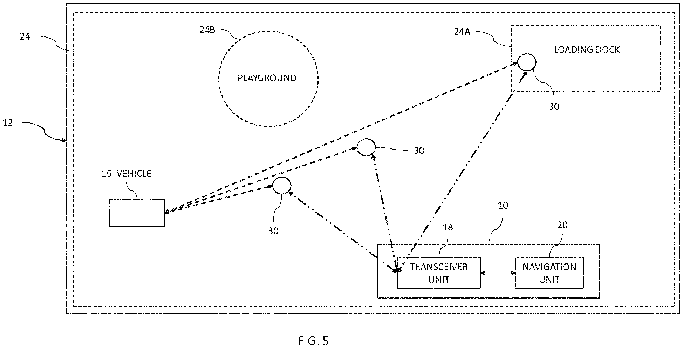

Fig. 5 illustrates the property 12 that includes at least one beacon 30, wherein the instructions and data instruct the vehicle 16 to operate within the property 12 based on signals received from the beacons 30. The beacons 30 are communicatively coupled with the navigation unit 20 and, in an example, transmit radio frequency signals, and/or ultrasonic, and/or light-based signals to the vehicle 16 that contain the instructions and data. In another example, the beacons 30 transmit an identification of the particular beacon 30 to the vehicle 16, and the instructions and data received by the vehicle 16 from the navigation unit 20 include the identification of the particular beacon 30. In this example, when the vehicle 16 receives the identification from the particular beacon 30, the instructions and data received from the navigation unit 20 are associated with the proximity of the vehicle 16 to the particular beacon 30. In an example, the instructions instruct the vehicle 16 to navigate to a specific beacon 30, such as the beacon 30 located within the loading dock zone. In another example, the instructions and data instruct the vehicle 16 to navigate between the beacons 30 to the desired destination 22. In yet another example, the instructions and data instruct the vehicle 16 to avoid the beacons 30 that may mark a hazard within the boundary of the property 12. In an example, these beacons 30 can be used to perform local positioning which will enable the vehicle position to be determined by both the beacons 30 and the vehicle 16. In this example, the positioning can be determined by RSSI positioning, time of flight, and/or angle of arrival positioning.

In an example, the instructions and data include a time constraint defining a time period in which the vehicle 16 is permitted to operate within boundaries of the property 12. The navigation unit 20 may establish the time constraint based on the purpose of the vehicle 16, and/or the destination 22 of the vehicle 16. In an example, the delivery vehicle 16 with the destination 22 of the loading dock may require 60 minutes to load and/or unload its cargo once it arrives at the loading dock. In this example, the navigation unit 20 establishes the time constraint to include travel time for the delivery vehicle 16 to navigate to and from the loading dock, and for the loading and/or unloading of the delivery vehicle 16. In another example, the time constraint may be associated with the hours of operation of the loading dock when personnel are available to attend to the delivery vehicle 16. In this example, the loading dock may not accept delivery vehicles 16 outside of a particular time window, such as between 18:00 and 6:00. In this example, the navigation unit 20 may not transmit the instructions and data to the delivery vehicle 16 during the period between 18:00 and 6:00 to inhibit delivery vehicles 16 from navigating within the boundary of the property 12.

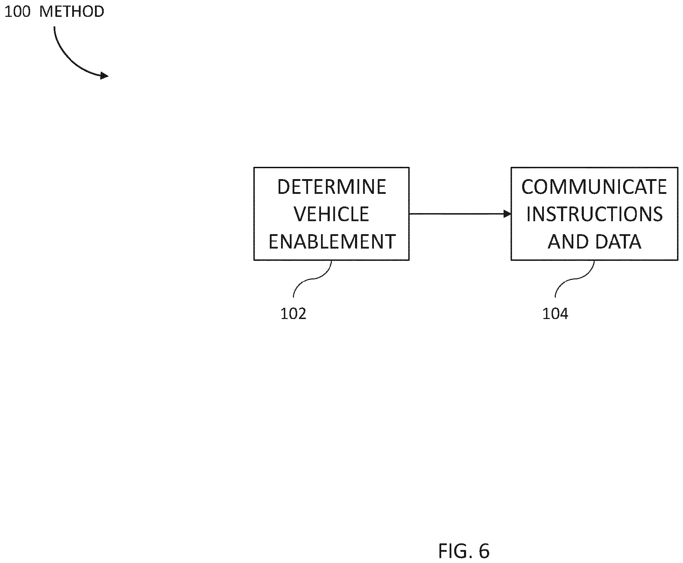

Fig. 6 is a flow chart illustrating a method 100 of operating the navigation device 10 associated with the property 12 for which navigation instructions or data are not publicly accessible by a vehicle navigation system 14.

Step 102, DETERMINE VEHICLE ENABLEMENT, includes determining, with the navigation device 10, whether the vehicle 16 should be enabled to navigate the property 12 as described above. The navigation device 10 includes the transceiver unit 18 communicatively coupled with the vehicle 16 as described above. The navigation device 10 includes the navigation unit 20 that communicates with the vehicle 16 via the transceiver unit 18. The vehicle 16 may transmit metadata associated with a purpose of the vehicle 16 to the navigation unit 20 as described above. The vehicle 16 may be an autonomous vehicle 16 as described above.

Step 104, COMMUNICATE INSTRUCTIONS AND DATA, includes communicating, via the transceiver unit 18, one or more of instructions and data that enable the vehicle 16 to navigate the property 12, as described above. The instructions and data may indicate a route that enables the vehicle 16 to navigate the property 12 as described above. The instructions and data may include GPS data that enables the vehicle 16 to navigate the property 12 as described above. The instructions and data may include the destination 22 for the vehicle 16 within boundaries of the property 12 as described above. The destination 22 may be based on an identity of the vehicle 16 as described above. The instructions and data may include at least one geofence 24. The vehicle 16 may be geotagged and tracked by the navigation unit 20 upon entering the property 12 as described above. The instructions and data received from the navigation unit 20 may be updated based on sensors located on the vehicle 16 as described above. The instructions and data may be deleted from the vehicle 16 upon exiting the property 12 or disabled via the revocation of the security key. The property 12 may include beacons 30 that transmit the instructions and data to the vehicle 16 as described above. The instructions and data may include a time constraint defining a time period in which the vehicle 16 is permitted to operate within boundaries of the property 12 as described above.

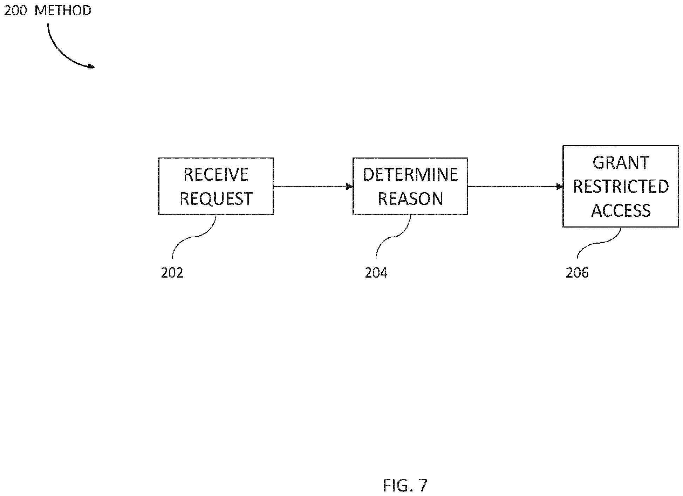

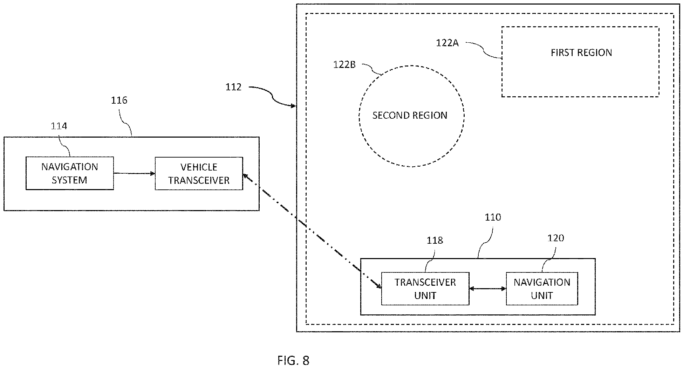

Fig. 7 is a flow chart illustrating an example of a method 200 of controlling vehicle 16 access to a restricted physical property 112 with an access control device 110 associated with the restricted physical property 112 illustrated in Fig. 8.

Step 202, RECEIVE REQUEST, includes receiving, via the access control device 110, a request from at least one vehicle 116 to enter the restricted physical property 112. The access control device 110 includes a transceiver unit 118 configured to communicatively couple with the vehicle 116. In an example, the transceiver unit 118 communicates with the vehicle 116 using V2I communication protocols that include both DSRC and non-DSRC technologies (e.g., RFID, WiMAX, Wi-Fi, Bluetooth, 5G V2I, and cellular communication.

The access control device 110 also includes a navigation unit 120 associated with the restricted physical property 112. The navigation unit 120 is communicatively coupled with the transceiver unit 118. The navigation unit 120 includes a controller circuit (not shown) configured to make the determination whether the vehicle 116 should be enabled to access the restricted physical property 112. The controller circuit includes the same functionality as described above for the navigation device 10.

Step 204, DETERMINE REASON, includes determining, via the access control device 110, a reason associated with the request from the vehicle 116 to enter the restricted physical property 112. In an example, the reason is to deliver cargo to a loading dock. In another example, the reason is to deliver passengers to a region of the restricted physical property 112. In an example the vehicle 116 transmits the reason associated with the request to the access control device 110. In another example, the reason associated with the request is stored in the memory of the controller circuit of the access control device 110, and is determined based on the identity of the vehicle 116.

Step 206, GRANT RESTRICTED ACCESS, includes determining, with the access control device 110, if the reason is for a first purpose or for a second purpose. If the reason is for the first purpose, the access control device 110 grants restricted access 206 to a first region 122A of the restricted physical property 112. If the reason is for the second purpose, the access control device 110 grants restricted access 206 to a second region 122B of the restricted physical property 112 different than the first region 122A of the restricted physical property 112. In an example, the first region 122A is a loading dock configured for the purpose of receiving delivery vehicles 116. In an example, the second region 122B is a playground configured to receive pedestrians from the AMoD vehicle 116. In another example, a private home having a large navigable area has the first region 122A as the primary entrance (e.g., a front door) designated to receive guests, and the second region 122B as a service entrance (e.g., a side door or back door) designated to receive packages and/or service personnel. In this example, the reason for the first purpose is to deliver guests and the access control device 110 grants restricted access 206 to the primary entrance. In this example, the reason for the second purpose is to deliver a package and the access control device 110 grants restricted access 206 to the service entrance. In yet another example, an expansive transportation hub, such as a cross dock, includes several docks designated to receive particular types of freight. In this example, the reason for the first purpose is to deliver freight to a first trucking company's dock and the access control device 110 grants restricted access 206 to the first trucking company's dock. In this example, the reason for the second purpose is to deliver freight to a second trucking company's dock and the access control device 110 grants restricted access 206 to the second trucking company's dock.

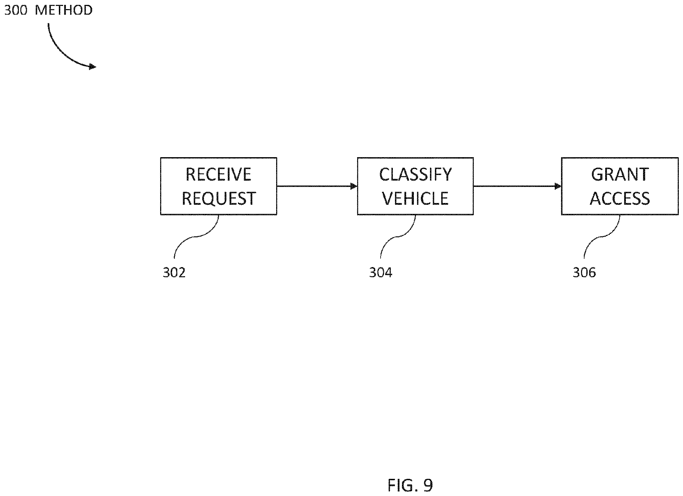

Fig. 9 is a flow chart illustrating another example of a method 300 of controlling vehicle 116 access to the restricted physical property 112 with the access control device 110 associated with the restricted physical property 112 illustrated in Fig. 8.

Step 302, RECEIVE REQUEST, includes receiving, via the access control device 110, a request from at least one vehicle 116 to access the restricted physical property 112.

Step 304, CLASSIFY VEHICLE, includes classifying, with the access control device 110, the vehicle 116 into one of a plurality of vehicle access categories. In an example, the vehicle access category is the delivery vehicle 116. In another example, the vehicle access category is an AMoD vehicle 116. In an example, the vehicle access categories are stored in the memory of the controller circuit of the access control device 110. In another example, the vehicle access category is transmitted by the vehicle 116 to the access control device 110.

Step 306, GRANT ACCESS, includes granting access, with the access control device 110, to the vehicle 116 in accordance with the classified vehicle access category. In an example, the access control device 110 grants the delivery vehicle 116 access to the first region 122A that is the loading dock. In an example, the access control device 110 grants the AMoD vehicle 116 access to the second region 122B that is the playground.

Accordingly, a navigation device 10 and a method 100 of operating the navigation device 10 are provided. The navigation device 10 is an improvement over other navigation devices because the navigation device 10 may provide a map of the property 12 to the vehicle 16 that enables autonomous vehicle operation on the property 12 without the driver having to take control of the vehicle 16.

While this invention has been described in terms of the preferred embodiments thereof, it is not intended to be so limited, but rather only to the extent set forth in the claims that follow. "One or more" includes a function being performed by one element, a function being performed by more than one element, e.g., in a distributed fashion, several functions being performed by one element, several functions being performed by several elements, or any combination of the above. It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact. The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "if' is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

Although the present disclosure is not so limited, the following numbered clauses demonstrate one or more aspects of the disclosure.

Clause 1. A navigation device associated with a navigable physical property for which navigation instructions or data are not publicly accessible by a vehicle navigation system, comprising: a transceiver unit configured to communicatively couple with a vehicle; and a navigation unit associated with the navigable physical property, wherein the navigation unit is configured to: determine, based on communications with the vehicle via the transceiver unit, whether the vehicle should be enabled to navigate the navigable physical property; and in accordance with the determination that the vehicle should be enabled to navigate the navigable physical property, communicate, via the transceiver unit, one or more of instructions and data that enable the vehicle to navigate the navigable physical property.

Clause 2. The navigation device of clause 1, wherein the instructions and data indicate a route that enables the vehicle to navigate the navigable physical property.

Clause 3. The navigation device of any one of the preceding clauses, wherein the instructions and data include GPS data that enables the vehicle to navigate the navigable physical property.

Clause 4. The navigation device of one of the preceding clauses, wherein the instructions and data include at least one geofence.

Clause 5. The navigation device of clause 4, wherein the instructions and data include operating instructions for the vehicle while the vehicle is traveling within the at least one geofence.

Clause 6. The navigation device of one of the preceding clauses, wherein the instructions and data include a destination for the vehicle within boundaries of the navigable physical property.

Clause 7. The navigation device of clause 6, wherein the destination is based on at least one of an identity of the vehicle, an identity of an occupant, and an identity of a package being delivered.

Clause 8. The navigation device of one of the preceding clauses, wherein the vehicle is geotagged upon entering the navigable physical property.

Clause 9. The navigation device of clause 8, wherein the vehicle is tracked by the navigation unit.

Clause 10. The navigation device of one of the preceding clauses, wherein the communications with the vehicle include a security key.

Clause 11. The navigation device of one of the preceding clauses, wherein the navigation unit transmits a notification of an arrival of the vehicle to another transceiver.

Clause 12. The navigation device of one of the preceding clauses, wherein the vehicle transmits metadata associated with a purpose of the vehicle to the navigation unit.

Clause 13. The navigation device of one of the preceding clauses, wherein the vehicle is an autonomous vehicle.

Clause 14. The navigation device of one of the preceding clauses, wherein the instructions and data in the navigation unit is updated based on sensors located on the vehicle.

Clause 15. The navigation device of one of the preceding clauses, wherein the instructions and data is deleted from the vehicle upon exiting the navigable physical property.

Clause 16. The navigation device of one of the preceding clauses, wherein the navigable physical property includes at least one beacon, wherein the instructions and data instruct the vehicle to operate within the navigable physical property based on signals received from the at least one beacon.

Clause 17. The navigation device of clause 16, wherein the at least one beacon transmits a radio frequency signal.

Clause 18. The navigation device of clause 16, wherein the at least one beacon transmits an ultrasonic signal.

Clause 19. The navigation device of one of the preceding clauses, wherein the instructions and data include a time constraint defining a time period in which the vehicle is permitted to operate within boundaries of the navigable physical property.

Clause 20. A method of operating a navigation device associated with a navigable physical property for which navigation instructions or data are not publicly accessible by a vehicle navigation system, comprising: a transceiver unit configured to communicatively couple with a vehicle; and a navigation unit associated with the navigable physical property, wherein the navigation unit is configured to: determine, based on communications with the vehicle via the transceiver unit, whether the vehicle should be enabled to navigate the navigable physical property; and in accordance with the determination that the vehicle should be enabled to navigate the navigable physical property, communicate, via the transceiver unit, one or more of instructions and data that enable the vehicle to navigate the navigable physical property.

Clause 21. The method of clause 20, wherein the instructions and data indicate a route that enables the vehicle to navigate the navigable physical property.

Clause 22. The method of any one of clauses 20 to 21, wherein the instructions and data include GPS data that enables the vehicle to navigate the navigable physical property.

Clause 23. The method of any one of clauses 20 to 22, wherein the instructions and data include at least one geofence.

Clause 24. The method of clause 23, wherein the instructions and data include operating instructions for the vehicle while the vehicle is traveling within the at least one geofence.

Clause 25. The method of any one of clauses 20 to 24, wherein the instructions and data include a destination for the vehicle within boundaries of the navigable physical property.

Clause 26. The method of clause 25, wherein the destination is based on at least one of an identity of the vehicle, an identity of an occupant, and an identity of a package being delivered.

Clause 27. The method of any one of clauses 20 to 26, wherein the vehicle is geotagged upon entering the navigable physical property.

Clause 28. The method of clause 27, wherein the vehicle is tracked by the navigation unit.

Clause 29. The method of any one of clauses 20 to 28, wherein the communications with the vehicle include a security key.

Clause 30. The method of any one of clauses 20 to 29, wherein the navigation unit transmits a notification of an arrival of the vehicle to another transceiver.

Clause 31. The method of any one of clauses 20 to 30, wherein the vehicle transmits metadata associated with a purpose of the vehicle to the navigation unit.

Clause 32. The method of any one of clauses 20 to 31, wherein the vehicle is an autonomous vehicle.

Clause 33. The method of any one of clauses 20 to 32, wherein the instructions and data in the navigation unit is updated based on sensors located on the vehicle.

Clause 34. The method of any one of clauses 20 to 34, wherein the instructions and data is deleted from the vehicle upon exiting the navigable physical property.

Clause 35. The method of any one of clauses 20 to 35 wherein the navigable physical property includes at least one beacon, wherein the instructions and data instruct the vehicle to operate within the navigable physical property based on signals received from the at least one beacon.

Clause 36. The method of clause 35, wherein the at least one beacon transmits a radio frequency signal.

Clause 37. The method of clause 35 or 36, wherein the at least one beacon transmits an ultrasonic signal.

Clause 38. The method of any one of clauses 20 to 37, wherein the instructions and data include a time constraint defining a time period in which the vehicle is permitted to operate within boundaries of the navigable physical property.

Clause 39. A method of controlling vehicle access to a restricted physical property, comprising: receiving, via an access control device associated with the restricted physical property, a request from at least one vehicle to enter the restricted physical property; determining, via the access control device, a reason associated with the request to enter the restricted physical property; and if the reason is for a first purpose; granting restricted access to a first region of the restricted physical property; and if the reason is for a second purpose different than the first purpose, granting restricted access to a second region of the restricted physical property different than the first region of the restricted physical property.

Clause 40. A method of controlling vehicle access to a restricted physical property, comprising: receiving, via an access control device associated with the restricted physical property, a request from at least one vehicle to access the restricted physical property; classifying the vehicle into one of a plurality of vehicle access categories; and granting access to the vehicle in accordance with the classified vehicle access category.

## Claims

1. A navigation device associated with a navigable physical property (12; 112) for which navigation instructions or data are not publicly accessible by a vehicle navigation system, comprising:
a transceiver unit (18; 118) configured to communicatively couple with a vehicle (16; 116); and
a navigation unit (20; 120) associated with the navigable physical property (12; 112), wherein the navigation unit (20; 120) is configured to:
determine, based on communications with the vehicle (16; 116) via the transceiver unit (18; 118), whether the vehicle (16; 116) should be enabled to navigate the navigable physical property (12; 112); and
in accordance with the determination that the vehicle (16; 116) should be enabled to navigate the navigable physical property (12; 112), communicate, via the transceiver unit (18; 118), one or more of instructions and data that enable the vehicle (16; 116) to navigate the navigable physical property (12; 112).

2. The navigation device of claim 1, wherein the instructions and data indicate a route that enables the vehicle (16; 116) to navigate the navigable physical property (12; 112).

3. The navigation device of claim 1 or 2, wherein the instructions and data include GPS data that enables the vehicle (16; 116) to navigate the navigable physical property (12; 112).

4. The navigation device of any one of claims 1 to 3, wherein the instructions and data include at least one geofence.

5. The navigation device of claim 4, wherein the instructions and data include operating instructions for the vehicle (16; 116) while the vehicle (16; 116) is traveling within the at least one geofence.

6. The navigation device of any one of claims 1 to 5, wherein the instructions and data include a destination for the vehicle (16; 116) within boundaries of the navigable physical property (12; 112).

7. The navigation device of claim 6, wherein the destination is based on at least one of an identity of the vehicle (16; 116), an identity of an occupant, and an identity of a package being delivered.

8. The navigation device of any one of claims 1 to 7, wherein the vehicle (16; 116) is geotagged upon entering the navigable physical property.

9. The navigation device of claim 8, wherein the vehicle (16; 116) is tracked by the navigation unit (20; 120).

10. The navigation device of any one of claims 1 to 9, wherein the communications with the vehicle (16; 116) include a security key.

11. The navigation device of any one of claims 1 to 10, wherein the navigation unit (20; 120) transmits a notification of an arrival of the vehicle (16; 116) to another transceiver.

12. The navigation device of any one of claims 1 to 11, wherein the vehicle (16; 116) transmits metadata associated with a purpose of the vehicle (16; 116) to the navigation unit (20; 120).

13. The navigation device of any one of claims 1 to 12, wherein the vehicle (16; 116) is an autonomous vehicle.

14. The navigation device of claim 1, wherein at least one of:
the instructions and data in the navigation unit (20; 120) is updated based on sensors located on the vehicle (16; 116);
the instructions and data is deleted from the vehicle (16; 116) upon exiting the navigable physical property (12; 112);
the navigable physical property (12; 112) includes at least one beacon and the instructions and data instruct the vehicle (16; 116) to operate within the navigable physical property (12; 112) based on signals received from the at least one beacon (30);
the at least one beacon (30) transmits a radio frequency signal;
the at least one beacon (30) transmits an ultrasonic signal; or
the instructions and data include a time constraint defining a time period in which the vehicle (16; 116) is permitted to operate within boundaries of the navigable physical property (12; 112).

15. A method of operating a navigation device associated with a navigable physical property (12; 112) for which navigation instructions or data are not publicly accessible by a vehicle navigation system, comprising:
a transceiver unit (18; 118) configured to communicatively couple with a vehicle (16; 116); and
a navigation unit (20; 120) associated with the navigable physical property (12; 112), wherein the navigation unit (20; 120) is configured to:
determine, based on communications with the vehicle (16; 116) via the transceiver (18; 118) unit, whether the vehicle (16; 116) should be enabled to navigate the navigable physical property (12; 112); and
in accordance with the determination that the vehicle (16; 116) should be enabled to navigate the navigable physical property (12; 112), communicate, via the transceiver unit (18; 118), one or more of instructions and data that enable the vehicle (16; 116) to navigate the navigable physical property (12; 112).
